# EUROPÄISCHE PATENTSCHRIFT

(11) **EP 1 432 935 B1**
(45) Veröffentlichungstag und Bekanntmachung des Hinweises auf die Patenterteilung: **06.06.2007**
(21) Anmeldenummer: 02800581.7
(22) Anmeldetag: 28.09.2002
(51) Int. Cl.: F16H 63/32, B21D 53/88

(54) **SCHALTARM**
SHIFTING ARM
BRAS DE COMMANDE

(30) Priorität: 04.10.2001 DE 10148980
(43) Veröffentlichungstag der Anmeldung: 30.06.2004
(73) Patentinhaber: Schaeffler KG, 91074 Herzogenaurach (DE)
(72) Erfinder: SEUFERLING, Stephan, 91315 Höchstadt (DE); DÖPPLING, Horst, 91074 Herzogenaurach (DE); WERNER, Stefan, 91413 Neustadt (DE); SCHÜBEL, Rainer, 91589 Aurach (DE)
(86) Internationale Anmeldenummer: PCT/EP2002/010915
(87) Internationale Veröffentlichungsnummer: WO 2003/031848

(56) Entgegenhaltungen:
- DE-A- 10 018 850
- DE-A- 19 919 271
- DE-A- 19 944 323
- DE-B- 1 122 385
- FR-A- 2 762 659

## Beschreibung

### Gebiet der Erfindung

Die Erfindung betrifft einen Schaltarm aus Blech für das Übertragen von Schaltbewegungen.

### Hintergrund der Erfindung

Derartige Schaltarme sind fest an Schaltelementen wie Schaltwellen oder Schaltgabeln angeordnet. Die Schaltwellen sitzen verschiebbar und/oder schwenkbar in dem Getriebe. Die Schaltgabeln sitzen z. B. verschiebbar und/der schwenkbar auf einer Schaltschiene. Die Schaltelemente werden mittels eines Schaltfingers oder eines ähnlich ausgebildeten Betätigungselementes verschoben und/oder geschwenkt. Das Betätigungselement greift in ein Schaltmaul oder eine ähnlich ausgebildete Aussparung an dem Schaltarm ein und überträgt Schaltbewegungen auf das Schaltelement. In das Schaltmaul greifen auch nicht selten Sperrzylinder oder Ähnliches ein, die ein Fehlschalten von Gängen verhindern.

Die durch die Schaltbewegungen auf den Schaltarm wirkenden Kräfte sind, insbesondere bei Fehlschaltungen, sehr hoch. In der Vergangenheit wurden Schaltarme des Standes der Technik deshalb vorwiegend aus dickem Blech oder Bandmaterial hergestellt. Dickes Ausgangsmaterial war auch erforderlich, um die in dem Schaltmaul ausgebildeten Anlaufflächen für die Schaltfinger ausreichend groß zu gestalten.

Die Schaltarme sind in der Regel Stanzteile. Die Anlaufflächen für den Schaltfinger liegen sich in dem Schaltmaul eines Schaltarmes in der Regel einander gegenüber. Ihr Abstand und ihre Ausrichtung zueinander müssen mit einer sehr hohen Genauigkeit ausgeführt sein. Ebenso sind die Anforderungen an die Maßgenauigkeit von anderen weiteren Funktionsflächen in dem Schaltmaul, wie z. B. Funktionsflächen für den Eingriff eines Sperrzylinders, sehr hoch. Die erforderlichen Genauigkeiten für die Funktionsmaße, wie für den Abstand der einander gegenüberliegenden Anlaufflächen in dem Schaltmaul, und Funktionsflächen, wie für die das Schaltmaul begrenzenden und für das sanfte Einspuren des Schaltfingers in das Schaltmaul benötigten Fasen und Abrundungen an Körperkanten, sind in der Regeln nur durch spanabhebende Nacharbeit zu erzielen. Funktionsflächen sind teilweise aufgrund des Stanzabrisses nach dem Stanzen an der Schnittkante der Teile für einen reibenden Kontakt mit dem Schaltfinger zu rauh und müssen auch deshalb spanabhebend nachgearbeitet werden.

Der Materialeinsatz für das Herstellen der Schaltarme ist relativ hoch. Die Schaltarme sind aufgrund ihrer massiven Bauweise relativ schwer und ihrer Formgestaltung ist aufgrund der Materialdicke des Ausgangsmaterials Grenzen gesetzt. Die Herstellung der Schaltarme ist aus den vorgenannten Gründen besonders in der Großserien- und Massenproduktion sehr kostenintensiv.

Einen Schaltarm der gattungsbildenden Art zeigt FR 27 62 659. Ein aus dickem Blech hergestellter Schaltarm ist an einer Schaltgabel befestigt. Dieser Schaltarm weist ein Schaltmaul auf. Die Wand des Schaltarmes ist im Bereich des Schaltmaules verstärkt, um Anlaufflächen ausreichender Breite zu schaffen.

DE 199 19 271 A1 offenbart eine Schaltschwinge aus Blech, die aus einem Rohling aus Stahlblech vorgestanzt wird, bevor dieser durch eine Biegeoperation zu dem fertigen Bauteil umgeformt wird.

### Zusammenfassung der Erfindung

Die Aufgabe der Erfindung ist es daher, einen Schaltarm zu schaffen, der die vorgenannten Nachteile nicht aufweist.

Diese Aufgabe ist gemäß dem kennzeichnenden Teil des Anspruchs 1 gelöst. Der Schaltarm ist ein aus dünnem Blech spanlos geformtes Umformteil. Die Vorteile eines Schaltarmes gemäß Erfindung im Vergleich zum Stand der Technik liegen in den geringen Kosten für seine Herstellung, besonders in der Großserien- und Massenproduktion. Der Verbrauch an Material für die Herstellung eines derartigen Schaltarmes ist gering. Das Gewicht dieses Schaltarmes ist bis zu 50% im Vergleich zu den anfangs beschriebenen Schaltarmen reduziert. Das dünne Material lässt nahezu unbegrenzte Formgestaltungen zu. Es sind spanlose Umformverfahren, insbesondere Verfahren für das Kaltumformen von Blechen, wie Walzen, Ziehen, Prägen und Stanzen, eingesetzt. Die erforderlichen Genauigkeiten für Funktionsmaße, wie für den Abstand der einander gegenüberliegenden Anlaufflächen in dem Schaltmaul, und Funktionsflächen, wie für die Lage und Bemaßung von Fasen und Rundungen für das sanfte Einspuren des Schaltfingers in dem Schaltmaul, ist in der Regel nur durch den oder die Formprozesse erzielbar. Spanabhebende Bearbeitung entfällt in der Regel.

Bevorzugt sind für die Herstellung der erfindungsgemäßen Schaltarme Bleche mit einer Stärke des Ausgangsmaterials bis zu 2mm, in Grenzfällen bis zu 2,5mm, eingesetzt. Als Material sind Bleche aus St35, Ck45, C35 sowie niedrig legierte Tiefziehstähle wie 16MnCr5, alle schweißbaren und weitere formbare Stähle und Tiefziehstähle einsetzbar. Bei der Auswahl des Werkstoffes ist auch, den unterschiedlichen Anwendungen angepasst, dessen Eignung zum Schweißen zusammen mit den Erfordernissen für das Härten zu berücksichtigen. Die Schaltarme sind bevorzugt durch Schweißen an Schaltelementen, wie Schaltstangen und Schaltgabeln befestigt. Eine harte Oberfläche weisen insbesondere die Anlaufflächen auf. Dazu sind die Schaltarme gemäß Erfindung in dem Bereich des Schaltmaules durch Induktionshärteverfahren randschichtgehärtet. Es ist auch denkbar aus Kostengründen den gesamten Schaltarm oder den mit dem Schaltelement verschweißten Schaltarm als Einheit zu härten. Dabei sind je nach verwendeter Stahlsorte Einsatzhärteverfahren oder Durchhärteverfahren anwendbar.

Die Aufgabe der Erfindung ist weiterhin dadurch gelöst, dass der Schaltarm ein aus dünnem Blech spanlos geformtes Umformteil mit einer zu einem Rand des Schaltarmes maulförmig geöffneten Ausnehmung für den Eingriff eines Schaltfingers ist. Mit der Ausnehmung ist an dem Schaltarm das Schaltmaul für den Eingriff des Schaltfingers geschaffen. Das Schaltmaul ist z. B. durch einen Schritt des Ausschneidens in einem mehrstufigen Umformprozess oder durch Stanzen mit nachfolgendem Prägen oder Durchstellen der Ränder des Schaltmaules geschaffen.

Mit dem Durchstellen der Ränder der Ausnehmung bzw. durch deren Prägen sind in einer weiteren Ausgestaltung der Erfindung Anlaufflächen für den Schaltfinger geschaffen. Das Blech an den Rändern der Ausnehmung ist vorzugsweise so durchgestellt, dass das Blech von dem eigentlichen flachen Grundkörper des Schaltarmes, zumeist rechtwinklig aber auch in jedem beliebigen anderen Winkel, abgewinkelt ist und möglichst einen die gesamte Ausnehmung säumenden Rand bildet. Die Breite des Randes ist bestimmt von der erforderlichen Breite der anschließend an den Rand geprägten oder mittels Kalibrieren erzeugten Anlaufflächen und/oder auch abhängig von den Anforderungen an die Steifigkeit des Schaltarmes.

Die Anlaufflächen für den Schaltfinger liegen sich in dem Schaltmaul in der Regel einander gegenüber. Ihr Abstand und ihre Ausrichtung zueinander müssen mit einer sehr hohen Genauigkeit ausgeführt sein. Ebenso sind die Anforderungen an die Maßgenauigkeit von anderen Funktionsflächen in dem Schaltmaul, wie z. B. von Funktionsflächen für die Anlage eines Sperrzylinders, sehr hoch. Diese Genauigkeiten für die Funktionsmaße, wie für den Abstand der einander gegenüberliegenden Anlaufflächen in dem Schaltmaul und deren Ausrichtung zueinander, sind in der Regel ohne spanabhebende Nacharbeit gewährbar. So ist mit einer Ausgestaltung der Erfindung vorgesehen, dass die Ausnehmung zumindest durch zwei einander planparallel gegenüberliegende und zueinander weisende spanlos geformte Anlaufflächen an abgewinkelten Abschnitten des Bleches begrenzt ist, wobei der Abstand zwischen den einander gegenüberliegenden Anlaufflächen durch spanlose Bearbeitung mit einer Genauigkeit ausgeführt ist, die eine Abweichung vom Sollwert des Abstandes von maximal 1/10 mm zulässt. Funktionsflächen, wie die Anlaufflächen und wie die das Schaltmaul bzw. die Anlaufflächen begrenzenden und für das sanfte Einspuren des Schaltfingers in das Schaltmaul benötigten Fasen und Rundungen an Körperkanten sind spanlos eingebracht. Die Oberfläche dieser Funktionsflächen ist aufgrund der Prägungen oder des Kalibrierens glatt und verfestigt. Die Verschleißfestigkeit der Flächen ist erhöht. Spanabhebendes Glätten entfällt.

Eine weitere Ausgestaltung der Erfindung sieht vor, dass die Ausnehmung zumindest durch zwei einander gegenüberliegende und zueinander weisende spanlos geformte Anlaufflächen an abgewinkelten Abschnitten des Bleches begrenzt ist. Der Schaltarm weist dabei zumindest eine die Anlauffläche zumindest einseitig zu einer weiteren Mantelfläche des Schaltarmes abgrenzenden Körperkante mit einer spanlos angeformten Fase auf. Ein die Fase im Querschnitt des Schaltarmes beschreibender Abstand zwischen einer die Anlauffläche zur Fase hin begrenzenden Kante sowie einer gedachten Schnittkante weist eine Genauigkeit auf, die eine Abweichung vom Sollwert des Abstandes von maximal 1/10 mm zulässt. Die gedachte Schnittkante ist eine zu der Kante parallele gemeinsame Schnittkante der über die Fase hinaus verlängerten Anlauffläche mit der über die Fase hinaus verlängerten weiteren Mantelfläche des Schaltarmes. Der Abstand der Kante, die die Anlauffläche von der mit der Fase erzeugten Fläche trennt ist somit zu dem Eckpunkt einer gedachten ungebrochenen Körperkante sehr genau und genauer als der Abstand durch spanabhebende Bearbeitung ausführbar ist.

Die Aufgabe ist weiterhin dadurch gelöst, dass der Schaltarm ein flaches aus dünnem Blech spanlos geformtes Umformteil ist, wobei das Umformteil an einem Ende gabelförmig ausgebildet ist und dabei an dem Ende mit zwei zinkenförmigen Vorsprüngen versehen ist. Der Schaltarm weist außerdem zumindest einen durch abgewinkeltes Blech gebildeten Rand an seiner Außenkontur auf. Jeder der Vorsprünge ist an einem von dem Blech des Schaltarmes abgewinkelten Abschnitt zumindest mit einer Anschlagfläche versehen, die einer weiteren, an dem anderen der Vorsprünge gegenüberliegende Anschlagfläche, gegenüberliegt. Ein derartige Schaltarm ist äußerst materialsparend herstellbar und weist ein geringes Gewicht auf. Die Möglichkeiten der Formgestaltung sind vielfältig.

Mit einer Ausgestaltung der Erfindung ist vorgesehen, dass der Schaltarm wenigstens eine von dem Schaltarm abgewinkelte Lasche aufweist und dass der Schaltarm mittels zumindest einer Schweißung an der Lasche mit einem Schaltelement verbunden ist. Die Lasche ist mit geeigneten Schweißverfahren, wie Laserschweißen, Widerstandsschweißen oder Schutzgasschweißen, an dem Schaltelement befestigt.

In einer Ausgestaltung der Erfindung ist der Schaltarm mit wenigstens einer sickenartig ausgebildeten Ausformung versehen. Gegen Ausknicken des Schaltarms und zur Erhöhung der Verwindungssteifigkeit ist der Schaltarm an den verschiedenen Wandabschnitten zweckentsprechend mit einer oder mehreren Sicken, spanlos erzeugten Doppelungen, Prägungen, Durchstellungen des Bleches oder Abkantungen des Bleches an den Rändern versehen. Sehr wirkungsvoll ist in dieser Hinsicht auch ein möglichst umlaufend verstärkter Rand an dem im Wesentlichen flach ausgebildeten Schaltarm. Dieser verstärkte Rand ist durch eine Sicke oder durch am Rand vom flachen Grundkörper abgewinkeltes Blech erzeugt.

Die Erfindung sieht, insbesondere für höhere Belastungen, vor, dass der Schaltarm ein konsolenförmiges aus dünnem Blech spanlos geformtes Umformteil ist. Der Schaltarm weist dabei einen ersten Wandabschnitt mit einer zu einem Rand des Schaltarmes maulförmige geöffneten Ausnehmung für den Eingriff eines Schaltfingers auf. Die Ausnehmung ist zumindest durch zwei einander gegenüberliegende sowie zueinander weisende spanlos geformte Anlaufflächen an abgewinkelten Abschnitten des Bleches begrenzt. Der erste Wandabschnitt geht einteilig in drei weitere von dem ersten Wandabschnitt abgewinkelte und in die gleiche Richtung weisende Wandabschnitte über. Eine Ausgestaltung der Erfindung sieht dazu weiter vor, dass die weiteren drei Wandabschnitte des Schaltarmes auch einteilig miteinander ausgebildet sind. Der Schaltarm ist somit durch ein schalenförmig ausgebildetes Ziehteil gebildet. Mit einer anderen Ausgestaltung ist vorgesehen, dass die in einer flachen Platine aneinander hängenden Wandabschnitte des Schaltarms aus dem flachen Zuschnitt so abgekantet, zusammengeführt und an den Berührungsstellen verschweißt werden, dass das Blechteil eine schalen- bzw. konsolenförmige Gestalt erhält.

Schließlich ist mit einer Ausgestaltung der Erfindung vorgesehen, dass der Schaltarm an wenigstens einem der Wandabschnitte wenigstens eine sickenartig ausgebildete Ausformung aufweist. Gegen Ausknicken des Schaltarmes und zur Erhöhung der Verwindungssteifigkeit ist der Schaltarm an mindestens einem oder einzelnen bzw. allen der verschiedenen Wandabschnitte zweckentsprechend mit einer oder mehreren Sicken, spanlos erzeugten Doppelungen, Prägungen, Durchstellungen des Bleches oder Abkantungen des Bleches an den Rändern versehen.

### Kurze Beschreibung der Zeichnungen

Die Erfindung wird nachfolgend anhand von mehreren Ausführungsbeispielen näher erläutert. Es zeigen:
- Figur 1: ein Ausführungsbeispiel eines erfindungsgemäßen Schaltarms in einer 3D-Ansicht,
- Figur 2: der Schaltarm aus Figur 1 in der Ansicht von vorne,
- Figur 3: der Schaltarm aus Figur 1 in einer Seitenansicht geschnitten entlang der Linie III-III nach Figur 2,
- Figur 4: eine Teilansicht des Schaltarmes nach Figur 1 in einer Schnittdarstellung entlang der Linie IV-IV nach Figur 2,
- Figur 5: ein Ausführungsbeispiel eines erfindungsgemäßen konsolenförmig ausgebildeten Schaltarmes,
- Figur 6: den Schaltarm aus Figur 5 in der Ansicht von vorne,
- Figur 7: der Schaltarm aus Figur 5 in einer Seitenansicht geschnitten entlang der Linie VII-VII nach Figur 6,
- Figur 8: ein weiteres Ausführungsbeispiel eines erfindungsgemäßen Schaltarms in seinem Ausgangszustand vor dem Zusammenführen der Wandabschnitte,
- Figur 9: den fertigen Schaltarm nach Figur 8 in der Ansicht von vorne,
- Figur 10: den Schaltarm nach Figur 9 in einer Seitenansicht, dargestellt im Schnitt,
- Figur 11: ein weiteres Ausführungsbeispiel eines flach ausgebildeten Schaltarmes,
- Figur 12: den Schaltarm aus Figur 10, befestigt an einem Schaltelement und
- Figur 13: den Schaltarm aus Figur 1 befestigt an einem Schaltelement.

### Detaillierte Beschreibung der Zeichnungen

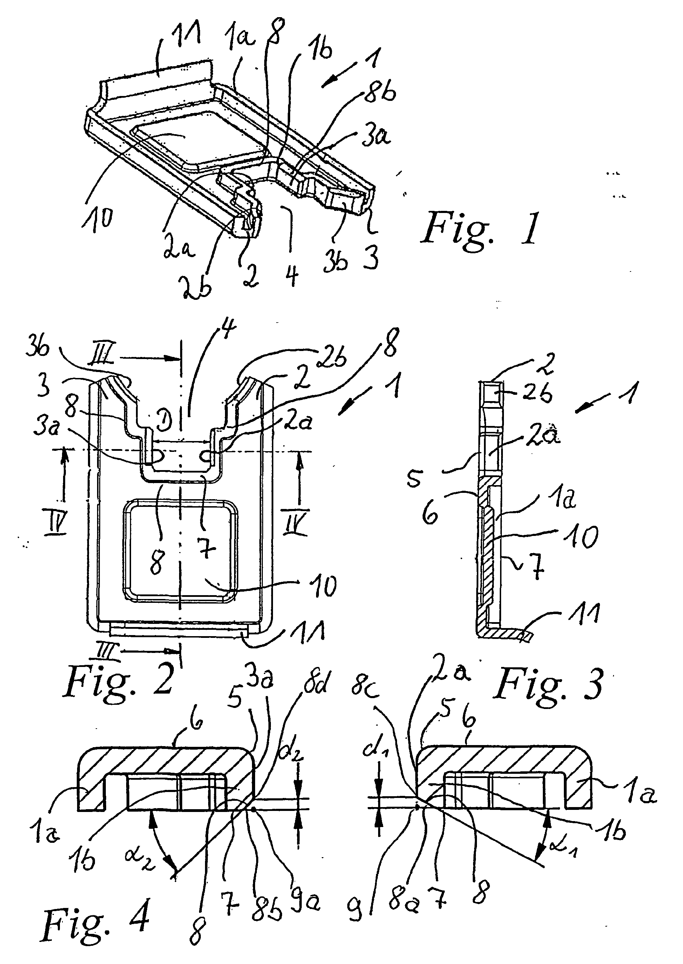

In den Figuren 1 bis 4 ist ein Schaltarm 1 dargestellt. Der Schaltarm 1 ist ein flaches aus 2mm dünnem Blech spanlos geformtes Umformteil. Das Umformteil ist gabelförmig, ausgebildet und weist zwei zinkenförmige Vorsprünge 2 und 3 auf. Die Vorsprünge 2 und 3 begrenzen eine Ausnehmung 4. Die Ausnehmung 4 ist teilweise durch vier einander gegenüberliegende Anlaufflächen 2a, 2b, 3a, 3b begrenzt. An den Anlaufflächen 2a und 3a läuft ein nicht dargestellter Schaltfinger an. Die einander gegenüberliegend ausgebildeten Anlaufflächen 2b und 3b sind in einer Sperrstellung ein Anschlag für einen nicht dargestellten Sperrzylinder bzw. Sperrbolzen. Jede der Anlaufflächen 2a, 2b, 3a, 3b ist an einem die Ausnehmung 4 säumenden und von dem Blech des Schaltarms 1 bzw. der Vorsprünge 2 und 3 abgewinkelten Abschnitt 1b ausgeformt. Die Anlaufflächen 2a und 3a weisen zueinander und sind planparallel zueinander ausgerichtet. Der lichte Abstand D zwischen den Anlaufflächen 2a und 3a ist durch spanloses Umformen mit einer Genauigkeit ausgeführt, die eine Abweichung vom Sollwert des Abstandes von maximal 1/10 mm zulässt.

Eine die Kontur der Ausnehmung 4 einseitig begrenzende Körperkante 5 grenzt die Anlaufflächen 2a, 2b, 3a, 3b (Figur 4) zu einer hinteren Mantelfläche 6 des Schaltarms ab. Die Körperkante 5 ist auf Höhe der Anlaufflächen 2a und 3a durch das Umformen abgerundet. Die Abrundung weist einen Radius auf, der kleiner als die Wandstärke des Schaltarms 1 in dem Bereich der Anschlagflächen 2a und 3a ist. Zu der anderen, der hinteren Mantelfläche 6 und damit der Körperkante 5, gegenüberliegenden flachen Seite des Schaltarms 1 mit der vorderen Mantelfläche 7 sind die Anlaufflächen 2a und 3a durch eine weitere Körperkante 8 abgegrenzt. Diese Körperkante 8 weist zumindest auf Höhe der Anlauffläche 2a eine Fase 8a und auf Höhe der Anlauffläche 3a eine Fase 8b auf. Der die Fase 8a im Querschnitt (Figur 4) zusammen mit dem Winkel α₁ beschreibende Abstand d₁ von der Kante 8c bis zu einer parallel zu der Kante 8c ausgerichteten gedachten gemeinsamen Schnittkante 9 ist mit einer Genauigkeit ausgeführt, die eine Abweichung des Sollwertes von maximal 1/10 mm zulässt. Die Kante 8c grenzt die Anlauffläche 2a zur Fase 8a ab. Die Schnittkante 9 ist eine Schnittkante, die eine gedachte und nicht von einer Fase gebrochene Körperkante zwischen der Anlauffläche 2a und der vorderen Mantelfläche 7 bilden würde. Der die Fase 8b im Querschnitt (Figur 4) zusammen mit dem Winkel α₂ beschreibende Abstand d₂ von der Kante 8d: bis zu einer parallel zu der Kante 8d ausgerichteten und gedachten gemeinsamten Schnittkante 9a ist, ebenso wie der Abstand d₁, mit einer Genauigkeit ausgeführt, die eine Abweichung des Sollwertes von maximal 1/10 mm zulässt. Dabei ist die Kante 8d eine die Anlauffläche 3a zur Fase 8b begrenzende Kante. Die Schnittkante 9a ist eine parallel zu der Kante 8d ausgerichtete Schnittkante, die eine gedachte und nicht von einer Fase gebrochene Körperkante zwischen der Anschlagfläche 3a und der vorderen Mantelfläche 7 bilden würde.

Der Schaltarm 1 ist an seinem Umriss mit einem aus abgewinkeltem Blech des Schaltarmes 1 gebildeten Rand 1a gegen unzulässige Verformungen unter Last verstärkt. Weiterhin weist der Schaltarm 1 eine sickenartig ausgebildete Ausformung 10 auf, die ebenfalls zu einer hohe Steifigkeit des Blechteils führt.

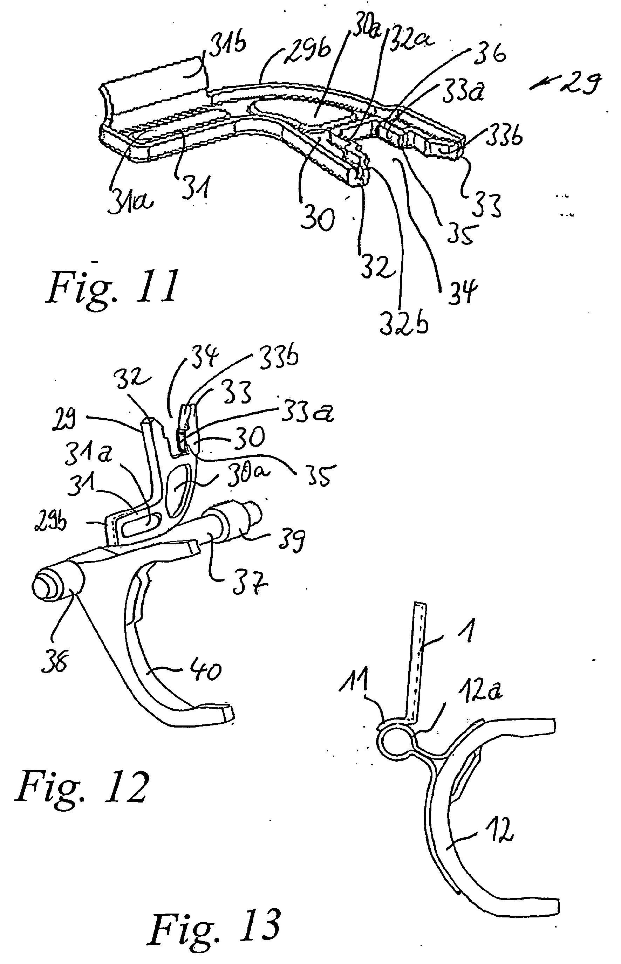

Von dem Schaltarm 1 geht eine Lasche 11 ab, die für die Befestigung des Schaltarmes an einem zu seiner Längsmittelachse beweglichen Schaltelement vorgesehen ist. In Figur 13 ist beispielsweise dargestellt, wie der Schaltarm 1 mittels der Lasche 11 an dem Führungsauge 12a einer Schaltgabel 12 befestigt ist. Die Lasche 11 ist der Form des Führungsauges 12a angepasst abgerundet gebogen und ist an dem Führungsauge 12a anliegend mit dem Führungsauge 12a verschweißt.

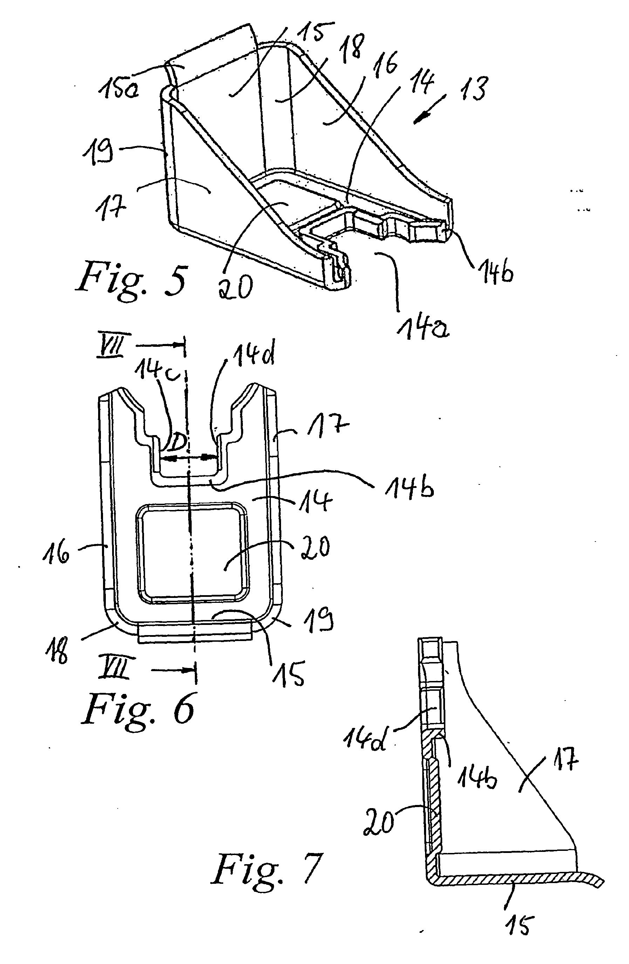

In Figur 5 bis Figur 7 ist ein weiteres Ausführungsbeispiel der Erfindung dargestellt. Ein Schaltarm 13 ist ein Umformteil aus dünnem Blech mit einer konsolenförmigen Gestalt. Der Schaltarm 13 ist aus einem ersten Wandabschnitt 14 und drei weiteren Wandabschnitten 15, 16 und 17 gebildet. Die drei Wandabschnitte 15, 16 und 17 gehen, einteilig mit dem ersten Wandabschnitt 14 ausgebildet, rechtwinklig sowie in die gleiche Richtung weisend von dem ersten Wandabschnitt 14 ab und sind auch untereinander an den Ecken 18 und 19 einstückig miteinander verbunden. Der Wandabschnitt 15 funktioniert als eine Stützplatte des Schaltarms 13, an dem sich der erste Wandabschnitt 14 bei Belastung, durch z. B. nicht dargestellte Schaltfinger, über die als Knotenbleche funktionierenden Wandabschnitte 16 und 17 abstützt. Für die Verankerung des Schaltarmes 13 an einem nicht dargestellten Schaltelement, wie z. B. einer Schaltgabel oder einer Schaltwelle, ist eine aus dem Wandabschnitt 15 hervorstehende Lasche 15a vorgesehen. Der erste Wandabschnitt 14 weist eine sickenartig ausgebildete Ausformung 20 auf, die wie die Wandabschnitte 16 und 17 zu einer hohen Steifigkeit des Blechteiles führt.

Der erste Wandabschnitt 14 ist mit einer zu dem freien Rand des Wandabschnittes 14 geöffneten maulförmigen Ausnehmung 14a versehen. Die Ausnehmung 14a ist an ihrem umlaufenden Rand 14b mit von dem flachen Wandabschnitt 14 abgewinkelten Blech gesäumt. In das Blech des Randes 14a sind jeweils spanlos Anlaufflächen 14c und 14d eingeformt. Die Anlaufflächen 14c und 14d liegen sich an der Ausnehmung 14a einander gegenüber und sind parallel zueinander ausgerichtet. Der Abstand D zwischen den Anlaufflächen 14c und 14d ist durch Kaltumformen von Blech mit einer Genauigkeit ausgeführt, die ein Abweichen des Abstandes D von seinem Sollwert von maximal 1/10 mm zulässt.

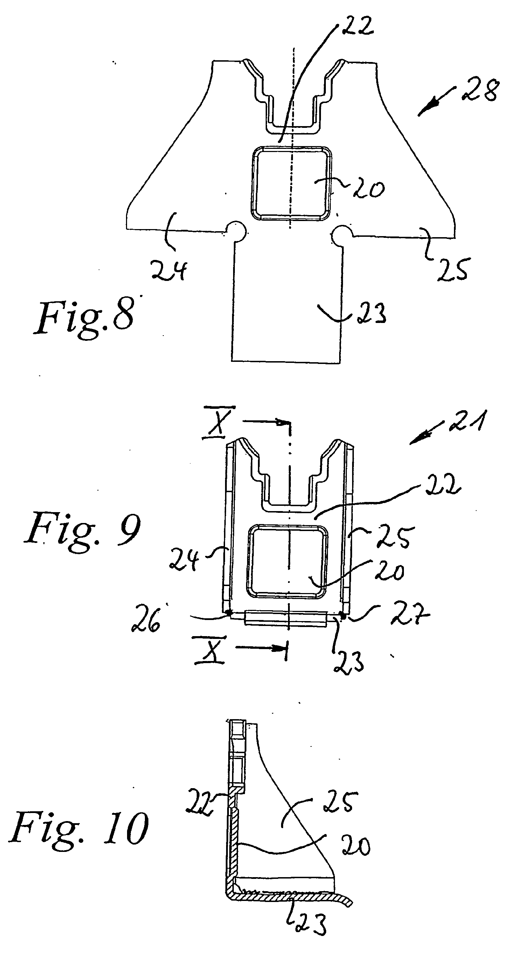

Die Figuren 9 und 10 zeigen eine alternative Ausbildung eines Schaltarmes 21 zu dem Schaltarm nach Figur 5. Der Schaltarm 21 ist aus einem ersten Wandabschnitt 22 und drei weiteren Wandabschnitten 23, 24 und 25 gebildet. Figur 8 zeigt den unfertigen Schaltarm 21 in Form eines teilweise am Schaltmaul umgeformten Zuschnittes 28. Die an diesem Zuschnitt 28 in der Ebene des Wandabschnittes 22 flach ausgestreckt vorliegenden Wandabschnitte 23, 24 und 25 sind einteilig mit dem Wandabschnitt 22 verbunden. Am fertigen Schaltarm 21 (Figur 9 und Figur 10) sind die Wandabschnitte 23, 24 und 25 rechtwinklig sowie die gleiche Richtung weisend von dem ersten Wandabschnitt 22 abgekantet. An den Ecken 26 und 27 sind die Wandabschnitte 23 und 24 bzw. 23 und 25 zusammengeführt und miteinander verschweißt.

Die Figuren 11 und 12 zeigen einen Schaltarm 29. Der Schaltarm 29 ist ein im Wesentlichen flach ausgebildetes Umformteil aus dünnem Blech. Der Schaltarm 29 ist in seiner Hauptebene abgewinkelt in zwei Schenkeln 30 und 31 verlaufend ausgeführt. Der Schenkel 30 ist an seinem freien Ende gabelförmig ausgebildet und weist zwei zinkenförmige Vorsprünge 32 und 33 auf. Die Vorsprünge 32 und 33 begrenzen eine Ausnehmung 34. Die Ausnehmung 34 ist teilweise durch vier einander gegenüberliegende Anschlagflächen 32a, 32b, 33a, 33b für einen nicht dargestellten Schaltfinger begrenzt. Die einander gegenüberliegend ausgebildeten Anschlagflächen 32b und 33b sind in einer Sperrstellung ein Anschlag für einen nicht dargestellten Sperrzylinder bzw. Sperrbolzen. Jede der Anschlagflächen 32a, 32b, 33a, 33b ist an einem die Ausnehmung 34 säumenden und von dem Blech des Schaltarmes 29 abgewinkelten Abschnitt 29a ausgeformt. Die Anschlagflächen 32a und 33a weisen zueinander und ihre Oberfläche ist von den Körperkanten 35 und 36 ausgehend zur Mitte der jeweiligen Anschlagfläche 32a und 33a leicht nach außen in die Ausnehmung 34 hinein ausgewölbt geformt.

Der Schaltarm 29 ist an seinem Umriss mit einem aus abgewinkelten Blech des Schaltarms 29 gebildeten Rand 29b gegen unzulässige Verformung unter Last verstärkt. Weiterhin weist der Schaltarm 29 eine sickenartig ausgebildete Ausformung 31a an dem Schenkel 31 sowie eine sickenartige Ausformung 30a an dem Schenkel 30 auf, die ebenfalls zu einer hohen Steifigkeit des Blechteils führen. Von dem Schaltarm 29 geht eine Lasche 31b ab, die für die Befestigung des Schaltarms 29 an einem zu seiner Längsmittelachse beweglichen Schaltelement vorgesehen ist.

In Figur 12 ist dargestellt, wie der Schaltarm 29 beispielsweise mittels der Lasche 31b an einer Schaltstange 37 befestigt ist. Die Lasche 31b ist der Form des zylindrischen Außenmantels der Schaltstange 37 angepasst abgerundet gebogen und an der Schaltstange 37 anliegend mit der Schaltstange 37 verschweißt. An der Schaltstange 37 ist eine Schaltgabel 40 befestigt. Die Schaltstange 37 ist mittels Lagern 38 und 39 entlang ihrer Längsmittelachse verschiebbar und um ihre Längsmittelachse schwenkbar in einem nicht dargestellten Getriebe gelagert.

### Bezugszeichen

- 1: Schaltarm
- 1a: Rand
- 1b: Abschnitt
- 2: Vorsprung
- 2a: Anlauffläche
- 2b: Anlauffläche
- 3: Vorsprung
- 3a: Anlauffläche
- 3b: Anlauffläche
- 4: Ausnehmung
- 5: Körperkante
- 6: hintere Mantelfläche
- 7: vordere Mantelfläche
- 8: Körperkante
- 8a: Fase
- 8b: Fase
- 8c: Kante
- 8d: Kante
- 9: Schnittkante
- 9a: Schnittkante
- 10: Ausformung
- 11: Lasche
- 12: Schaltgabel
- 12a: Führungsauge
- 13: Schaltarm
- 13a: Abschnitt
- 14: erster Wandabschnitt
- 14a: Ausnehmung:
- 14b: Rand
- 14c: Anlauffläche
- 14d: Anlauffläche
- 15: weiterer Wandabschnitt
- 15a: Lasche
- 16: weiterer Wandabschnitt
- 17: weiterer Wandabschnitt
- 18: Ecke
- 19: Ecke
- 20: Ausformung
- 21: Schaltarm
- 22: erster Wandabschnitt
- 23: weiterer Wandabschnitt
- 24: weiterer Wandabschnitt
- 25: weiterer Wandabschnitt
- 26: Ecke
- 27: Ecke
- 28: Zuschnitt
- 29: Schaltarm
- 29a: Abschnitt
- 29b: Rand
- 30: Schenkel
- 30a: Ausformung.
- 31: Schenkel
- 31a: Ausformung
- 31b: Lasche
- 32: Vorsprung
- 32a: Anlauffläche
- 32b: Anlauffläche
- 33: Vorsprung
- 33a: Anlauffläche
- 33b: Anlauffläche
- 34: Ausnehmung
- 35: Körperkante
- 36: Körperkante
- 37: Schaltstange
- 38: Lager
- 39: Lager
- 40: Schaltgabel

## Patentansprüche

1. Schaltarm (1, 13, 21, 29) aus Blech für das Übertragen von Schaltbewegungen, wobei der Schaltarm (1, 13, 21, 29) ein aus dünnem Blech spanlos geformtes Umformteil mit einer zu einem Rand des Schaltarmes (1, 13, 21, 29) maulförmig geöffneten Ausnehmung (4, 14a, 34) für den Eingriff eines Schaltfingers ist, **dadurch gekennzeichnet, dass** das Blech am Rand der Ausnehmung (4, 14a, 34) abgewinkelt ist.

2. Schaltarm nach Anspruch 1, **dadurch gekennzeichnet, dass** das Blech in seinem Ausgangszustand vor dem Formen des Schaltarmes (1, 13, 21, 29) eine Dicke bis 2mm aufweist.

3. Schaltarm nach Anspruch 1, **dadurch gekennzeichnet, dass** der Werkstoff des Schaltarmes (1, 13, 21, 29) ein Tiefziehstahl ist.

4. Schaltarm nach Anspruch 1, **dadurch gekennzeichnet, dass** der Werkstoff des Schaltarmes (1, 13, 21, 29) ein niedrig legierter Tiefziehstahl ist.

5. Schaltarm nach Anspruch 1, **dadurch gekennzeichnet, dass** der Schaltarm (1, 13, 21, 29) über geeignete Schweißverfahren mit einem zu seiner Längsmittelachse beweglichen Schaltelement verbunden ist.

6. Schaltstange (37), die entlang ihrer Längsmittelachse verschiebbar und um ihre Längsmittelachse schwenkbar ist, mit einem Schaltarm nach Anspruch 1.

7. Schaltgabel (12) mit einem Schaltarm nach Anspruch 1.

8. Schaltarm nach Anspruch 1, **dadurch gekennzeichnet, dass** die Ausnehmung (4, 14a, 34) zumindest teilweise durch wenigstens zwei einander gegenüberliegende und zueinander weisende Anlaufflächen (2a, 2b, 3a, 3b, 14c, 14d, 32a, 32b, 33a, 33b) begrenzt ist.

9. Schaltarm nach Anspruch 1, **dadurch gekennzeichnet, dass** die Ausnehmung (4, 14a) zumindest teilweise durch wenigstens zwei einander planparallel gegenüberliegende und zueinander weisende spanlos geformte Anlaufflächen (2a, 2b, 14c, 14d) an zumindest einem abgewinkelten Abschnitt (1b, 13a) des Bleches begrenzt ist.

10. Schaltarm nach Anspruch 1, **dadurch gekennzeichnet, dass** die Ausnehmung (4, 14a) zumindest teilweise durch wenigstens zwei einander planparallel gegenüberliegende und zueinander weisende spanlos geformte Anlaufflächen (2a, 2b, 14c, 14d) an abgewinkelten Abschnitten (1b, 13a) des Bleches begrenzt ist, wobei der Abstand zwischen den einander gegenüberliegenden Anlaufflächen (2a, 2b, 14c, 14d) durch spanlose Bearbeitung mit einer Genauigkeit ausgeführt ist, die eine Abweichung vom Sollwert des Abstandes von maximal 1/10 mm zulässt.

11. Schaltarm nach Anspruch 1, **dadurch gekennzeichnet, dass** die Ausnehmung (4) zumindest teilweise durch wenigstens zwei einander gegenüberliegende und zueinander weisende spanlos geformte Anlaufflächen (2a, 3a) begrenzt ist, wobei sich der Anlauffläche (2a, 3a) zumindest einseitig eine spanlos abgerundete Körperkante (5) anschließt.

12. Schaltarm nach Anspruch 1, **dadurch gekennzeichnet, dass** die Ausnehmung (4) zumindest teilweise durch wenigstens zwei einander gegenüberliegende und zueinander weisende spanlos geformte Anlaufflächen (2a, 3a) an wenigstens einem abgewinkelten Abschnitt (1b) des Bleches begrenzt ist, wobei der Schaltarm (1) zumindest eine die Anlauffläche (2a, 3a) zumindest einseitig zu einer Mantelfläche (7) des Schaltarmes (1) abgrenzende Körperkante (8) mit einer spanlos angeformten Fase (8a, 8b) aufweist.

13. Schaltarm nach Anspruch 1, **dadurch gekennzeichnet, dass** die Ausnehmung (4) zumindest teilweise durch wenigstens zwei einander gegenüberliegende und zueinander weisende spanlos geformte Anlaufflächen (2a, 3a) an wenigstens einem abgewinkelten Abschnitt (1b) des Bleches begrenzt ist, wobei der Schaltarm (1) zumindest eine die Anlauffläche (2a, 3a) wenigstens einseitig zu einer Mantelfläche (7) des Schaltarmes (1) abgrenzenden Körperkante (8) mit einer spanlos angeformten Fase (8a, 8b) aufweist, und dass ein die Fase (8a, 8b) im Querschnitt des Schaltarms (1) beschreibender Abstand zwischen einer die Anlauffiläche (2a, 3a) zur Fase (8a, 8b) hin begrenzenden Kante (8c, 8d) sowie einer zu der Kante (8c, 8d) parallelen gedachten gemeinsamen Schnittkante (9, 9a) der über die Fase (8a, 8b) hinaus verlängerten Anlauffläche (2a, 3a) mit der über die Fase (8a, 8b) hinaus verlängerten Mantelfläche (7) des Schaltarms (1) eine Genauigkeit aufweist, die eine Abweichung vom Sollwert des Abstandes von maximal 1/10 mm zulässt.

14. Schaltarm nach Anspruch 1, **dadurch gekennzeichnet, dass** das Umformteil an einem Ende gabelförmig ausgebildet und dabei an dem Ende mit zwei zinkenförmigen Vorsprüngen (2, 3, 32, 33) versehen ist sowie zumindest einen durch abgewinkeltes Blech gebildeten Rand (1a, 29) aufweist und wobei jeder der Vorsprünge (2, 3, 32, 33) an einem abgewinkelten Abschnitt (1b, 29a) zumindest eine einer anderen Anlauffläche (2a, 2b, 3a, 3b, 32a, 32b, 33a, 33b) an dem anderen der Vorsprünge (2, 3, 32, 33) gegenüberliegende Anlauffläche (2a, 2b, 3a, 3b, 32a, 32b, 33a, 33b) aufweist.

15. Schaltarm nach Anspruch 14, **dadurch gekennzeichnet, dass** der Schaltarm (1, 29) wenigstens eine von dem Schaltarm (1, 29) abgehende Lasche (11, 31b) aufweist und dass der Schaltarm (1, 29) mittels zumindest einer Schweißung an der Lasche (11, 31b) mit einem Schaltelement verbunden ist.

16. Schaltarm nach Anspruch 14, **dadurch gekennzeichnet, dass** der Schaltarm (1, 29) mit wenigstens einer sickenartig ausgebildeten Ausformung (10, 31a, 30a) des Bleches versehen ist.

17. Schaltarm nach Anspruch 1, **dadurch gekennzeichnet, dass** der Schaltarm (13, 21) ein konsolenförmiges Umformteil ist, wobei der Schaltarm (13, 21) einen ersten Wandabschnitt (14, 22) mit einer zu einem Rand des Schaltarms (13, 21) maulförmig geöffneten Ausnehmung (14a) für den Eingriff eines Schaltfingers aufweist und die Ausnehmung (14a) zumindest teilweise durch wenigstens zwei einander gegenüberliegende sowie zueinander weisende spanlos geformte Anlaufflächen (14c, 14d) an abgewinkelten Abschnitten (13a) des Bleches begrenzt ist und wobei der erste Wandabschnitt (14) einteilig in drei weitere von dem ersten Wandabschnitt (14) abgewinkelte und in die gleiche Richtung weisende Wandabschnitte (15, 16, 17) übergeht.

18. Schaltarm nach Anspruch 17, **dadurch gekennzeichnet, dass** die weiteren drei Wandabschnitte (15, 16, 17) einteilig miteinander ausgebildet sind.

19. Schaltarm nach Anspruch 17, **dadurch gekennzeichnet, dass** die drei weiteren Wandabschnitte (23, 24, 25) von dem ersten Wandabschnitt (22) abgekantet, zusammengeführt und jeweils zwei der weiteren Wandabschnitte (23, 24, 25) aneinander befestigt sind.

20. Schaltarm nach Anspruch 17, **dadurch gekennzeichnet, dass** der Schaltarm (13, 21) mit wenigstens einer sickenartig ausgebildeten Ausformung (20) des Bleches versehen ist.

## Claims

1. Gearshift arm (1, 13, 21, 29) out of sheet metal for transmitting gear shifting movements, said gearshift arm (1, 13, 21, 29) being a shaped part made without chip removal out of thin sheet metal and comprising a recess (4, 14a, 34) that is open in a mouth-shape towards an edge of the gearshift arm (1, 13, 21, 29) for engagement of a gearshift finger, **characterised in that** the sheet metal at the edge of the recess (4, 14a, 34) is bent at an angle.

2. Gearshift arm according to claim 1, **characterised in that**, in its initial state prior to shaping of the gearshift arm (1, 13, 21, 29), the sheet metal has a thickness of up to 2 mm.

3. Gearshift arm according to claim 1, **characterised in that** the material of the gearshift arm (1, 13, 21, 29) is a deep-drawing steel.

4. Gearshift arm according to claim 1, **characterised in that** the material of the gearshift arm (1, 13, 21, 29) is a low alloy deep-drawing steel.

5. Gearshift arm according to claim 1, **characterised in that** the gearshift arm (1, 13, 21, 29) is connected by suitable welding methods to a gearshift element that is displaceable along it central longitudinal axis.

6. Gearshift rod (37) that is displaceable along its central longitudinal axis and can pivot about its central longitudinal axis, with a gearshift arm according to claim 1.

7. Gearshift fork (12) with a gearshift arm according to claim 1.

8. Gearshift arm according to claim 1, **characterised in that** the recess (4, 14a, 34) is defined at least partially by at least two stop surfaces (2a, 2b, 3a, 3b, 14c, 14d, 32a, 32b, 33a, 33b) that are situated opposite each other and are oriented towards each other.

9. Gearshift arm according to claim 1, **characterised in that** the recess (4, 14a) is defined at least partially by at least two parallel-faced stop surfaces (2a, 2b, 14c, 14d) that are shaped without chip removal while being situated opposite each other and oriented towards each other on at least one angled section (1 b, 13a) of the sheet metal.

10. Gearshift arm according to claim 1, **characterised in that** the recess (4, 14a) is defined at least partially by at least two parallel-faced stop surfaces (2a, 2b, 14c, 14d) that are shaped without chip removal while being situated opposite each other and oriented towards each other on angled sections (1b, 13a) of the sheet metal, the distance between the stop surfaces (2a, 2b, 14c, 14d) situated opposite each other being realised without chip removal with a precision that permits a maximum deviation of 1/10 mm from the desired value of the distance.

11. Gearshift arm according to claim 1, **characterised in that** the recess (4) is defined at least partially by at least two stop surfaces (2a, 3a) that are shaped without chip removal while being situated opposite each other and oriented towards each other, said stop surface (2a, 3a) merging at least on one side with a body edge (5) that is rounded without chip removal.

12. Gearshift arm according to claim 1, **characterised in that** the recess (4) is defined at least partially by at least two stop surfaces (2a, 3a) that are shaped without chip removal while being situated opposite each other and oriented towards each other on at least one angled section (1b) of the sheet metal, said gearshift arm (1) comprising at least one body edge (8) having a bevel (8a, 8b) integrally formed thereon without chip removal, which body edge (8) separates the stop surface (2a, 3a) from an outer surface (7) of the gearshift arm (1) at least on one side.

13. Gearshift arm according to claim 1, **characterised in that** the recess (4) is defined at least partially by at least two stop surfaces (2a, 3a) that are shaped without chip removal while being situated opposite each other and oriented towards each other on at least one angled section (1b) of the sheet metal, said gearshift arm (1) comprising at least one body edge (8) having a bevel (8a, 8b) integrally formed thereon without chip removal, which body edge (8) separates the stop surface (2a, 3a) from an outer surface (7) of the gearshift arm (1) at least on one side, and a distance describing the bevel (8a, 8b) in the cross-section of the gearshift arm (1) between an edge (8c, 8d) that limits the stop surface (2a, 3a) in the direction of the bevel (8a, 8b) and, parallel to the edge (8c, 8d), an imaginary, common intersecting edge (9, 9a) of the stop surface (2a, 3a) prolonged beyond the bevel (8a, 8b) with the outer surface (7) of the gearshift arm (1) prolonged beyond the bevel (8a, 8b) possesses a precision that permits a maximum deviation of 1/10 mm from the desired value of the distance.

14. Gearshift arm according to claim 1, **characterised in that** the shaped part has a bifurcated configuration at one end and this end comprises two projections (2, 3, 32, 33) in the form of fork arms and further comprises at least one edge (1a, 29b) formed by angled sheet metal, and each of the projections (2, 3, 32, 33) comprises on an angled section (1b, 29a) at least one stop surface (2a, 2b, 3a, 3b, 32a, 32b, 33a, 33b) that is situated opposite another stop surface (2a, 2b, 3a, 3b, 32a, 32b, 33a, 33b) on the other of the projections (2, 3, 32, 33).

15. Gearshift arm according to claim 14, **characterised in that** the gearshift arm (1, 29) comprises at least one tab (11, 31b) that starts from the gearshift arm (1, 29), and the gearshift arm (1, 29) is connected to a gearshift element by means of at least one weld joint on the tab (11, 31b).

16. Gearshift arm according to claim 14, **characterised in that** the gearshift arm (1, 29) is provided with at least one bead-like shaped portion (10, 31a, 30a) in the sheet material.

17. Gearshift arm according to claim 1, **characterised in that** the gearshift arm (13, 21) is a bracket-like shaped part, the gearshift arm (13, 21) comprises a first wall section (14, 22) having a mouth-shaped recess (14a) that is open towards an edge of the gearshift arm (13, 21) for engagement of a gearshift finger, the recess (14a) is defined at least partially by at least two stop surfaces (14c, 14d) that are shaped without chip removal while being situated opposite each other and oriented towards each other on angled sections (13a) of the sheet metal, and the first wall section (14) merges integrally with three further wall sections (15, 16, 17) that are bent at an angle from the first wall section (14) and point in the same direction.

18. Gearshift arm according to claim 17, **characterised in that** the three further wall sections (15, 16, 17) are configured in one piece with one another.

19. Gearshift arm according to claim 17, **characterised in that** the three further wall sections (23, 24, 25) are folded from the first wall section (22) and every two of the further wall sections (23, 24, 25) are fixed to each other.

20. Gearshift arm according to claim 17, **characterised in that** the gearshift arm (13, 21) is provided with at least one bead-like shaped part (20) in the sheet material.

## Revendications

1. Bras (1, 13, 21, 29) de changement de vitesse fait en tôle pour la transmission de mouvements de changement de vitesse, ledit bras (1, 13, 21, 29) de changement de vitesse étant une pièce formée sans enlèvement de copeaux à partir d'une tôle métallique à paroi mince ayant un évidement (4, 14a, 34) qui est ouvert en forme de bouche vers un bord du bras (1, 13, 21, 29) de changement de vitesse pour l'engagement d'un doigt de changement de vitesse, **caractérisé en ce que** la tôle métallique au bord de l'évidement (4, 14a, 34) est repliée.

2. Bras de changement de vitesse selon la revendication 1, **caractérisé en ce que**, à son état de départ avant le formage du bras (1, 13, 21, 29) de changement de vitesse, la tôle métallique a une épaisseur de jusqu'à 2 mm.

3. Bras de changement de vitesse selon la revendication 1, **caractérisé en ce que** la matière de base du bras (1, 13, 21, 29) de changement de vitesse est un acier d'emboutissage.

4. Bras de changement de vitesse selon la revendication 1, **caractérisé en ce que** la matière de base du bras (1, 13, 21, 29) de changement de vitesse est un acier d'emboutissage faiblement allié.

5. Bras de changement de vitesse selon la revendication 1, **caractérisé en ce que** le bras (1, 13, 21, 29) de changement de vitesse est relié par des procédés appropriés de soudage à un élément de changement de vitesse qui est déplaçable le long de son axe longitudinal central.

6. Tringle (37) de changement de vitesse qui est déplaçable le long de son axe longitudinal central et qui peut pivoter autour de son axe longitudinal central, avec un bras de changement de vitesse selon la revendication 1.

7. Fourchette (12) de changement de vitesse avec un bras de changement de vitesse selon la revendication 1.

8. Bras de changement de vitesse selon la revendication 1, **caractérisé en ce que** l'évidement (4, 14a, 34) est défini, au moins partiellement, par, au moins, deux surfaces de butée opposées (2a, 2b, 3a, 3b, 14c, 14d, 32a, 32b, 33a, 33b) qui sont orientées l'une vers l'autre.

9. Bras de changement de vitesse selon la revendication 1, **caractérisé en ce que** l'évidement (4, 14a) est défini, au moins partiellement, par, au moins, deux surfaces de butée (2a, 2b, 14c, 14d) opposées à faces parallèles qui sont orientées, l'une vers l'autre, en étant formées sans enlèvement de copeaux sur, au moins, une section (1b, 13a) repliée de la tôle métallique.

10. Bras de changement de vitesse selon la revendication 1, **caractérisé en ce que** l'évidement (4, 14a) est défini, au moins partiellement, par, au moins, deux surfaces de butée (2a, 2b, 14c, 14d) opposées à faces parallèles qui sont orientées, l'une vers l'autre, en étant formées sans enlèvement de copeaux sur des sections (1b, 13a) repliées de la tôle métallique, la distance entre les surfaces de butée (2a, 2b, 14c, 14d) opposées étant réalisé sans enlèvement de copeaux avec une précision qui permet un écart maximal de 1/10 mm par rapport à la valeur voulue de cette distance.

11. Bras de changement de vitesse selon la revendication 1, **caractérisé en ce que** l'évidement (4) est défini, au moins partiellement, par, au moins, deux surfaces de butée (2a, 3a) opposées qui sont orientées, l'une vers l'autre, en étant formées sans enlèvement de copeaux, un bord arrondi (5) de corps sans enlèvement de copeaux se raccordant à la surface de butée (2a, 3a), au moins d'un côté.

12. Bras de changement de vitesse selon la revendication 1, **caractérisé en ce que** l'évidement (4) est défini, au moins partiellement, par, au moins, deux surfaces de butée (2a, 3a) opposées qui sont orientées, l'une vers l'autre, en étant formées sans enlèvement de copeaux sur au moins une section (1b) repliée de la tôle métallique, ledit bras (1) de changement de vitesse comprenant au moins un bord (8) de corps ayant un chanfrein (8a, 8b) formé sur celui-ci sans enlèvement de copeaux, et ledit bord (8) de corps délimitant, au moins d'un côté, la surface de butée (2a, 3a) par rapport à une surface extérieure (7) du bras (1) de changement de vitesse.

13. Bras de changement de vitesse selon la revendication 1, **caractérisé en ce que** l'évidement (4) est défini, au moins partiellement, par, au moins, deux surfaces de butée (2a, 3a) opposées qui sont orientées, l'une vers l'autre, en étant formées sans enlèvement de copeaux sur au moins une section (1b) repliée de la tôle métallique, ledit bras (1) de changement de vitesse comprenant au moins un bord (8) de corps ayant un chanfrein (8a, 8b) formé sur celui-ci sans enlèvement de copeaux, et ledit bord (8) de corps délimitant, au moins d'un côté, la surface de butée (2a, 3a) par rapport à une surface extérieure (7) du bras (1) de changement de vitesse, et **en ce que**, une distance décrivant le chanfrein (8a, 8b) en coupe droite du bras (1) de changement de vitesse entre un bord (8c, 8d) qui délimite la surface de butée (2a, 3a) vers le chanfrein (8a, 8b) et, parallèle au bord (8c, 8b), un bord (9, 9a) de coupe commun, imaginaire de la surface de butée (2a, 3a) prolongée au delà du chanfrein (8a, 8b) avec la surface extérieure (7) du bras (1) de changement de vitesse prolongée au-delà du chanfrein (8a, 8b) possède une précision qui permet un écart maximal de 1/10 mm par rapport à la valeur voulue de cette distance.

14. Bras de changement de vitesse selon la revendication 1, **caractérisé en ce que** la pièce formée a, à l'une des ses extrémités, une configuration bifurquée et comprend sur cette extrémité deux saillies (2, 3, 32, 33) en forme de bras de fourche et, au moins, un bord (1a, 29b) formé par de la tôle repliée, chacune des saillies (2, 3, 32, 33) possédant sur une section repliée (1b, 29a) au moins une surface de butée (2a, 2b, 3a, 3b, 32a, 32b, 33a, 33b) opposée à une autre surface de butée (2a, 2b, 3a, 3b, 32a, 32b, 33a, 33b) sur l'autre des saillies (2, 3, 32, 33).

15. Bras de changement de vitesse selon la revendication 14, **caractérisé en ce que** le bras (1, 29) de changement de vitesse comprend au moins un talon (11, 31b) qui s'étend à partir du bras (1, 29) de changement de vitesse, et **en ce que** le bras (1, 29) de changement de vitesse est relié à un élément de changement de vitesse par au moins une soudure sur le talon (11, 31b).

16. Bras de changement de vitesse selon la revendication 14, **caractérisé en ce que** le bras (1, 29) de changement de vitesse comprend au moins une partie formée (10, 31a, 30a) en forme de moulure dans la tôle métallique.

17. Bras de changement de vitesse selon la revendication 1, **caractérisé en ce que** le bras (13, 21) de changement de vitesse est une pièce formée en forme de console, ledit bras (13, 21) de changement de vitesse comprenant une première section (14, 22) de paroi ayant un évidement (14a) qui est ouvert en forme de bouche vers un bord du bras (13, 21) de changement de vitesse pour l'engagement d'un doigt de changement de vitesse, ledit évidement (14a) étant défini, au moins partiellement, par, au moins, deux surfaces de butée (14c, 14d) opposées qui sont orientées, l'une vers l'autre, en étant formées sans enlèvement de copeaux sur des sections (13a) repliées de la tôle métallique, et ladite première section (14) de paroi se raccordant, d'un seul tenant, à trois autres sections (15, 16, 17) de paroi qui sont repliées à partir de la première section (14) de paroi en étant orientées dans la même direction.

18. Bras de changement de vitesse selon la revendication 17, **caractérisé en ce que** les trois autres sections (15, 16, 17) de paroi sont configurées d'un seul tenant, l'une avec l'autre.

19. Bras de changement de vitesse selon la revendication 17, **caractérisé en ce que** les trois autres sections (23, 24, 25) de paroi sont pliées à partir de la première section (22) de paroi, sont réunies, l'une à l'autre, et deux des autres sections (23, 24, 25) de paroi sont fixées, à chaque fois, l'une à l'autre.

20. Bras de changement de vitesse selon la revendication 17, **caractérisé en ce que** le bras (13, 21) de changement de vitesse est muni au moins d'une partie formée (20) en forme de moulure dans la tôle métallique.
